# EUROPEAN PATENT APPLICATION

(11) **EP 4 712 439 A1**
(43) Date of publication of application: **18.03.2026**
(21) Application number: 24818660.3
(22) Date of filing: 05.06.2024
(51) Int. Cl.: H04L 61/5014

(54) **COMMUNICATION METHOD AND COMMUNICATION DEVICE**

(30) Priority: 06.06.2023 CN 202310664580; 22.08.2023 CN 202311061513
(71) Applicant: Huawei Cloud Computing Technologies Co., Ltd., Guiyang, Guizhou, 550025 (CN)
(72) Inventor: GAO, Jiarui, Guiyang, Guizhou 550025 (CN); GAO, Zhonghua, Guiyang, Guizhou 550025 (CN); XU, Zihe, Guiyang, Guizhou 550025 (CN)
(74) Representative: MERH-IP Matias Erny Reichl Hoffmann Patentanwälte PartG mbB
(86) International application number: PCT/CN2024/097397
(87) International publication number: WO 2024/251128

(57) **Abstract**

This application provides a communication method and a communication device. A first dynamic host configuration protocol DHCP server configured to allocate a plurality of internet protocol IP addresses to an elastic network interface of a first elastic cloud server ECS may be configured based on first configuration information of a tenant, so that in a cloud service system, the elastic network interface of the first ECS can dynamically obtain the plurality of IP addresses by using the DHCP server, thereby facilitating use of the tenant and ensuring tenant's service experience.

## Description

This application claims priority to Chinese Patent Application No. 202310664580.3, filed with the China National Intellectual Property Administration on June 6, 2023 and entitled "METHOD FOR OBTAINING plurality of internet protocol IP addresses AND COMPUTING DEVICE", which is incorporated herein by reference in its entirety.

This application claims priority to Chinese Patent Application No. 202311061513.9, filed with the China National Intellectual Property Administration on August 22, 2023 and entitled "COMMUNICATION METHOD AND COMMUNICATION DEVICE", which is incorporated herein by reference in its entirety.

### TECHNICAL FIELD

This application relates to the field of cloud service systems, and more specifically, to a communication method and a communication device.

### BACKGROUND

Cloud servers represent one of the most popular computing resource service forms. Especially in the era of cloud computing, cloud servers are widely used for hosting various applications such as websites, application programs, and databases. When cloud servers are used, a plurality of internet protocol (internet protocol, IP) addresses need to be configured sometimes to extend services of application programs. For example, when a Web server cluster is constructed, a plurality of services with different network properties are required, or different clients need to access the internet, a plurality of IP addresses need to be configured on the cloud server. In existing solutions, one or more IP addresses may be obtained through manual static configuration, but such an approach is very inconvenient in actual use. For example, in some scenarios, when a tenant may temporarily need a large quantity of IP addresses, the tenant needs to perform static configuration before using them. This is very inconvenient and severely affects tenant's service experience.

Therefore, in cloud service systems, there is a need for a method for obtaining a plurality of internet protocol addresses to ensure tenants' service experience.

### SUMMARY

This application provides a communication method and a communication device, so that an elastic network interface of an elastic cloud server ECS in a cloud service system can dynamically obtain a plurality of internet protocol IP addresses, thereby ensuring service experience of a tenant.

According to a first aspect, a communication method is provided. The method may be applied to a cloud service system, and the method may be performed by a cloud management platform (or a communication device in the cloud management platform), or may be performed by a component (such as a chip or a circuit) of the cloud management platform (or the communication device in the cloud management platform). In this application, the cloud management platform is configured to manage an infrastructure that provides a cloud service, the infrastructure includes at least one virtual private cloud VPC, and each virtual private cloud VPC includes at least one elastic cloud server ECS.

The method includes: receiving first configuration information from a tenant, where the first configuration information indicates to configure a plurality of internet protocol IP addresses for an elastic network interface of a first elastic cloud server ECS in the at least one elastic cloud server ECS; and configuring a first dynamic host configuration protocol DHCP server based on the first configuration information, where the first dynamic host configuration protocol DHCP server is configured to allocate the plurality of IP addresses to the elastic network interface of the first elastic cloud server ECS.

It should be understood that, generally, attribute information of an ECS includes a VPC network to which the ECS belongs. In other words, when the tenant specifies an ECS to enable a capability of requesting a plurality of IP addresses to be allocated, the tenant may view, in attribute information of the ECS, a VPC network to which the ECS belongs.

Based on the foregoing technical solution, in this application, the first DHCP server that is configured to allocate the plurality of IP addresses to the elastic network interface of the first ECS may be configured based on the first configuration information of the tenant, so that in the cloud service system, the elastic network interface of the first ECS can dynamically obtain the plurality of IP addresses by using the DHCP server, thereby facilitating use of the tenant and ensuring tenant's service experience.

In this scenario, the DHCP server is exclusive. That is, each ECS in the VPC can be assigned a plurality of IP addresses by a dedicated DHCP server. In this case, for example, a first ECS in a first VPC has a dedicated first DHCP server. In this case, the first DHCP service may specially allocate a plurality of IP addresses to the first ECS in the first VPC, but cannot allocate a plurality of IP addresses to other ECSs in the first VPC, and cannot allocate a plurality of IP addresses to an ECS in a second VPC.

With reference to the first aspect, in a possible implementation, the method further includes: receiving second configuration information from the tenant, where the second configuration information includes: a range of the plurality of IP addresses entered by the tenant, and a quantity of the plurality of IP addresses entered by the tenant and/or the plurality of IP addresses entered by the tenant; and configuring the second configuration information for the first dynamic host configuration protocol DHCP server.

In this application, the range of the plurality of IP addresses allocated by the first DHCP server to the elastic network interface of the first ECS may be determined by the tenant.

In this application, when the tenant enables a capability of an elastic network interface of an ECS to request a plurality of IP addresses to be allocated, the tenant may further specify a range of the allocated IP addresses and a quantity of IP addresses, or the tenant may further manually fill in IP addresses. Specifically, after the tenant specifies the range of IP addresses, the tenant may manually fill in IP addresses, or the VPC may automatically allocate IP addresses. For example, when the tenant manually allocates IP addresses, the tenant may first query specific IP addresses that are currently available in the specified range of IP addresses, and then the tenant may manually fill in a plurality of IP addresses. For another example, the tenant may fill in a quantity of required IP addresses, and the DHCP server automatically allocates IP addresses based on the range of IP addresses and the quantity of IP addresses. In this application, the cloud management platform may configure, for the first DHCP server, the second configuration information entered by the tenant, and subsequently, the first DHCP server may determine IP addresses that are specifically allocated to the elastic network interface of the first ECS.

With reference to the first aspect, in a possible implementation, the method further includes: receiving, by the first dynamic host configuration protocol DHCP server, a plurality of first request messages from the elastic network interface of the first elastic cloud server ECS, where each first request message is used to request one IP address to be allocated; determining, by the first dynamic host configuration protocol DHCP server based on the plurality of first request messages and the configured second configuration information, the IP address corresponding to each first request message; and sending, by the first dynamic host configuration protocol DHCP server, a plurality of first response messages to the elastic network interface of the first elastic cloud server ECS, where each first response message carries one IP address, and the plurality of first response messages are in one-to-one correspondence with the plurality of first request messages.

With reference to the first aspect, in a possible implementation, each first request message carries one client hardware address, the plurality of IP addresses are allocated by the first DHCP server to the elastic network interface of the first elastic cloud server ECS based on the plurality of client hardware addresses, and the plurality of IP addresses are in one-to-one correspondence with the plurality of client hardware addresses.

In this application, once the tenant specifies an elastic network interface of an ECS to enable a function of requesting a DHCP server to allocate a plurality of IP addresses, the cloud management platform configures a dedicated DHCP server (for example, a DHCP server #A) to allocate a plurality of IP addresses to the elastic network interface of the ECS. Considering that one elastic network interface has one MAC address, DHCP request messages cannot be filled in with the MAC address, because the DHCP server considers that the DHCP request messages are the same and allocates only one IP address. In this case, the DHCP request messages may carry hardware addresses actually corresponding to clients, to distinguish between the DHCP request messages, and obtain different IP addresses respectively.

It should be understood that, generally, in some scenarios, a client hardware address needs to be managed and generated by each client. In some other scenarios, a client hardware address may be allocated and specified by the tenant.

With reference to the first aspect, in a possible implementation, the method further includes: obtaining a first mapping relationship, where the first mapping relationship includes a mapping relationship between the plurality of IP addresses and the plurality of client hardware addresses, and the plurality of IP addresses are in one-to-one correspondence with the plurality of client hardware addresses; and displaying the first mapping relationship to the tenant.

For example, a query message is sent to the first dynamic host configuration protocol DHCP server, where the query message is used to query allocation information of the plurality of IP addresses; a response message is received from the first dynamic host configuration protocol DHCP server, where the response message carries the first mapping relationship, and the first mapping relationship includes the one-to-one correspondence between the plurality of IP addresses and the plurality of client hardware addresses; and the first mapping relationship is displayed to the tenant based on the response message.

For example, the first dynamic host configuration protocol DHCP server may periodically report the first mapping relationship to the cloud management platform, and the cloud management platform may display the received first mapping relationship to the tenant.

In this application, the cloud management platform may query the DHCP server for an allocation status of an IP address, and display the allocation status of the IP address to the tenant. The tenant may learn, based on a display interface, that an IP address is allocated to a client. For example, an IP address #1 is allocated to a client #A (for example, a hardware address of the client #A is 5453286ed489b8082020202020330000) for use, an IP address #2 is allocated to a client #B (a hardware address of the client #B is 5453286ed489b8082020202020330001) for use, and an IP address #3 is allocated to a client #C (a hardware address of the client #C is 5453286ed489b8082020202020330002) for use.

With reference to the first aspect, in a possible implementation, the first DHCP server is deployed in a first computing node, and the first computing node includes the first elastic cloud server ECS; or the first DHCP server is deployed in a DHCP server cluster, and the DHCP server cluster is a computing node or a network node.

In this application, it is proposed that a DHCP deployment manner may be distributed deployment, or may be centralized deployment. For example, when the first DHCP server is deployed in a distributed manner, the first DHCP server may be deployed in the first computing node, and the first ECS is also deployed in the first computing node. For another example, when the first DHCP server is deployed in a centralized manner, the first DHCP server may be deployed in the DHCP server cluster, and the DHCP server cluster includes a plurality of DHCP servers. For example, the DHCP server cluster may be one computing node. For another example, the DHCP server cluster may be one network node.

According to a second aspect, a communication method is provided. The method may be applied to a cloud service system, and the method may be performed by a cloud management platform (or a communication device in the cloud management platform), or may be performed by a component (such as a chip or a circuit) of the cloud management platform (or the communication device in the cloud management platform). The cloud management platform is configured to manage an infrastructure that provides a cloud service, the infrastructure includes at least one virtual private cloud VPC, and each private cloud VPC includes a plurality of elastic cloud servers ECSs.

It should be understood that beneficial effects achieved by the solutions in the second aspect may be understood with reference to the beneficial effects implemented by the corresponding solutions in the first aspect. Details are not described again.

The method includes: receiving third configuration information from a tenant, where the third configuration information indicates to create a dynamic host configuration protocol internet protocol DHCP IP address pool for a second virtual private cloud VPC in the at least one virtual private cloud VPC; configuring the dynamic host configuration protocol internet protocol DHCP IP address pool based on the third configuration information; receiving fourth configuration information from the tenant, where the fourth configuration information indicates to configure a plurality of internet protocol IP addresses for an elastic network interface of a second elastic cloud server ECS in the at least one elastic cloud server ECS, and the second elastic cloud server ECS is one of elastic cloud servers ECSs included in the second virtual private cloud VPC; configuring a second dynamic host configuration protocol DHCP server for the dynamic host configuration protocol internet protocol DHCP IP address pool based on the fourth configuration information, where the second dynamic host configuration protocol DHCP server is configured to manage addresses in the dynamic host configuration protocol internet protocol DHCP IP address pool; receiving fifth configuration information from the tenant, where the fifth configuration information indicates that the plurality of elastic cloud servers ECSs included in the second virtual private cloud VPC are associated with the dynamic host configuration protocol internet protocol DHCP IP address pool; and configuring, based on the fifth configuration information, the second dynamic host configuration protocol DHCP server to configure the plurality of IP addresses for an elastic network interface of each elastic cloud server ECS in the plurality of elastic cloud servers ECSs included in the second virtual private cloud VPC.

In this application, the DHCP IP address pool is used to store IP addresses. A range of the stored IP addresses, a quantity of IP addresses, and specific IP addresses included in the IP address pool are configured by the tenant. This application proposes the DHCP IP address pool to maximize IP address utilization and avoid IP address fragmentation. The DHCP IP address pool may be used to reclaim an IP address that is not required by a client, and allocate the IP address to another client for use in time, thereby maximizing resource utilization and saving IP address resources.

In this application, in this scenario, the DHCP IP address pool may be shared by the servers. It may also be understood that a plurality of ECSs in a same VPC may share IP addresses in the DHCP IP address pool. In this case, for example, an ECS #1, an ECS #2, and an ECS #3 in the second VPC may share a same DHCP IP address pool. It may also be understood that the second DHCP server may allocate a plurality of IP addresses to a plurality of ECSs in the second VPC at the same time.

In this application, the DHCP IP address pool may be used to allocate a plurality of IP addresses to each ECS in all the ECSs included in the second VPC. However, a specific ECS that enables a capability of requesting a plurality of IP addresses to be allocated needs to be specified by the tenant. In other words, in this application, a user may specify one or more ECSs in the second VPC to enable the capability.

Based on the foregoing technical solution, in this application, the cloud management platform may configure, based on the third configuration information of the tenant, the DHCP IP address pool used to allocate the plurality of internet protocol IP addresses to the elastic network interfaces of the plurality of ECSs in the second VPC, and may configure the second DHCP server for the DHCP IP address pool based on the fourth configuration information and the fifth configuration information of the tenant, and the DHCP IP address pool is associated with the second VPC. Therefore, the second DHCP server may separately configure the plurality of IP addresses for the elastic network interface of each ECS in the plurality of ECSs included in the second VPC. In this way, in the cloud service system, the elastic network interface of the second ECS can dynamically obtain the plurality of IP addresses by using the DHCP server, thereby facilitating use of the tenant and ensuring tenant's service experience.

With reference to the second aspect, in a possible implementation, the method further includes: receiving sixth configuration information from the tenant, where the sixth configuration information is used to configure information about the IP addresses for the dynamic host configuration protocol internet protocol DHCP IP address pool, and the sixth configuration information includes: a range of the plurality of IP addresses entered by the tenant, and a quantity of the plurality of IP addresses entered by the tenant and/or the plurality of IP addresses entered by the tenant; and configuring the sixth configuration information for the second dynamic host configuration protocol DHCP server.

With reference to the second aspect, in a possible implementation, the method further includes: receiving, by the second dynamic host configuration protocol DHCP server, a plurality of second request messages from the elastic network interface of the second elastic cloud server ECS, where each second request message is used to request one IP address to be allocated; determining, by the second dynamic host configuration protocol DHCP server based on the plurality of first request messages and the configured fifth configuration information, the IP address corresponding to each second request message; and sending, by the second dynamic host configuration protocol DHCP server, a plurality of second response messages to the elastic network interface of the second elastic cloud server ECS, where each second response message carries one IP address, and the plurality of second response messages are in one-to-one correspondence with the plurality of second request messages.

With reference to the second aspect, in a possible implementation, each first request message carries one client hardware address, the plurality of IP addresses are allocated by the second dynamic host configuration protocol DHCP server to the elastic network interface of the second elastic cloud server ECS based on the plurality of client hardware addresses, and the plurality of IP addresses are in one-to-one correspondence with the plurality of client hardware addresses.

With reference to the second aspect, in a possible implementation, a second mapping relationship is obtained, where the second mapping relationship includes a mapping relationship between the plurality of IP addresses and the plurality of client hardware addresses, and the plurality of IP addresses are in one-to-one correspondence with the plurality of client hardware addresses; and the second mapping relationship is displayed to the tenant.

For example, a query message is sent to the second dynamic host configuration protocol DHCP server, where the query message is used to query allocation information of the plurality of IP addresses; a response message is received from the second dynamic host configuration protocol DHCP server, where the response message carries the second mapping relationship, and the second mapping relationship includes the one-to-one correspondence between the plurality of IP addresses and the plurality of client hardware addresses; and the second mapping relationship is displayed to the tenant based on the response message.

For example, the second dynamic host configuration protocol DHCP server may periodically report the second mapping relationship to the cloud management platform, and the cloud management platform may display the received second mapping relationship to the tenant.

With reference to the second aspect, in a possible implementation, the second dynamic host configuration protocol DHCP server is deployed in a second computing node, and the second computing node includes the second elastic cloud server ECS; or the second DHCP server is deployed in a DHCP server cluster, and the DHCP server cluster is a computing node or a network node.

According to a third aspect, this application provides a communication device, and the device is configured to perform the method in the first aspect or the second aspect. Specifically, the device may include a unit and/or a module configured to perform the communication method provided in this application, for example, a transceiver unit and/or a processing unit. In this application, the communication device is used in a cloud management platform. Alternatively, the communication device is a cloud management platform.

According to a fourth aspect, this application provides a communication device. The device includes at least one processor, configured to execute a computer program or instructions stored in a memory, to perform the method in the first aspect or the second aspect. Optionally, the device further includes the memory, configured to store the computer program or the instructions. Optionally, the device further includes a communication interface, and the processor reads, through the communication interface, the computer program or the instructions stored in the memory.

In an implementation, the device is a communication device that is used in a cloud management platform and that is configured to implement a function of the foregoing communication method in a chip. Alternatively, the device is a cloud management platform.

In another implementation, the device is a communication device that is used in a chip, a chip system, or a circuit in a cloud management platform and that is configured to implement a function of the foregoing communication method in a chip.

According to a fifth aspect, this application provides a processor, including an input circuit, an output circuit, and a processing circuit. The processing circuit is configured to receive a signal through the input circuit, and transmit a signal through the output circuit, so that the processor performs the method in the first aspect or the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Unless otherwise specified, or if operations, such as sending and obtaining/receiving, related to the processor do not contradict actual functions or internal logic of the operations in related descriptions, the operations may be understood as operations, such as outputting, receiving, and inputting, of the processor, or may be understood as sending and receiving operations performed by a radio frequency circuit and an antenna. This is not limited in this application.

According to a sixth aspect, a processing device is provided, including a processor and a memory. The processor is configured to read instructions stored in the memory, and may receive a signal via a receiver and transmit a signal via a transmitter, to perform the method in the first aspect or the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device in the sixth aspect may be one or more chips. The processor in the processing device may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. The memory may be integrated into the processor, or may be located outside the processor and exist independently.

According to a seventh aspect, a computing cluster is provided, including at least one computing device. Each computing device includes a processor and a memory, and the processor of the at least one computing device is configured to execute instructions stored in the memory of the at least one computing device, so that the computing device cluster performs the method in any one of the possible implementations of the first aspect or the second aspect or the method in any one of the possible implementations of the second aspect.

Optionally, the processor may be a general-purpose processor, and may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. The memory may be integrated into the processor, or may be located outside the processor and exist independently.

According to an eighth aspect, a computer-readable storage medium is provided. The computer-readable storage medium stores program code executed by a device, and the program code is used to perform the method in the first aspect or the second aspect.

According to a ninth aspect, a computer program product including instructions is provided. When the computer program product runs on a computer, the computer is enabled to perform the method in the first aspect or the second aspect.

According to a tenth aspect, a chip system is provided, including a processor, configured to invoke a computer program from a memory and run the computer program, so that a device in which the chip system is installed performs the method in the first aspect or the second aspect.

According to an eleventh aspect, a cloud service system is provided. The cloud service system includes a cloud management platform, and a computing node and/or a network node, the cloud management platform is configured to perform the method in any one of the possible implementations of the first aspect, and the computing node is configured to perform related actions of a first ECS and a first DHCP server. Alternatively, the cloud management platform is configured to perform the method in any one of the possible implementations of the second aspect, and the computing node is configured to perform related actions of a plurality of ECSs in a second VPC and a related action of a second DHCP server. The first DHCP server is deployed in the computing node or the network node, and the second DHCP server is deployed in the computing node or the network node.

### BRIEF DESCRIPTION OF DRAWINGS

FIG. 1 is a diagram of a scenario provided in this application;
FIG. 2 is a diagram of a cloud service scenario used in this application;
FIG. 3 is a schematic flowchart of a communication method 300 according to this application;
FIG. 4 is a diagram of enabling a capability of requesting a DHCP to allocate a plurality of IP addresses by a tenant and specifying allocated IP addresses by the tenant according to this application;
FIG. 5 is a diagram of automatically allocating IP addresses according to this application;
FIG. 6 is a diagram of manually allocating IP addresses by a tenant according to this application;
FIG. 7 is a diagram of viewing used IP addresses by a tenant according to this application;
FIG. 8 is a diagram of a distributed architecture of a DHCP server in an exclusive model according to this application;
FIG. 9 is a diagram of a centralized architecture of a DHCP server in an exclusive mode according to this application;
FIG. 10 is a schematic flowchart of a communication method 1000 according to this application;
FIG. 11 is a diagram of specifying a DHCP IP resource pool created for a VPC by a tenant according to this application;
FIG. 12 is another diagram of enabling, by a tenant, a capability of requesting a DHCP to allocate a plurality of IP addresses and specifying allocated IP addresses by the tenant according to this application;
FIG. 13 is another diagram of a distributed architecture of a DHCP server in a shared model according to this application;
FIG. 14 is another diagram of a centralized architecture of a DHCP server in a shared mode according to this application;
FIG. 15 is a diagram of a scenario to which this application is applicable;
FIG. 16 is a diagram of another scenario to which this application is applicable;
FIG. 17 is a block diagram of a communication device 1700 according to this application;
FIG. 18 is a block diagram of a communication device 1800 according to this application;
FIG. 19 is a diagram of an architecture of a computing device cluster according to this application; and
FIG. 20 is a diagram in which computing devices 1100A and 1100B are connected over a network according to this application.

### DESCRIPTION OF EMBODIMENTS

For ease of understanding of technical solutions of this application, the following first briefly describes some terms in this application.

### 1. Dynamic host configuration protocol (dynamic host configuration protocol, DHCP)

The DHCP is a network protocol for a local area network. The protocol allows servers to dynamically allocate internet protocol (internet protocol, IP) addresses and configuration information to clients. The DHCP is usually used to automatically allocate IP addresses to users over an intranet or a network service provider.

### 2. Client hardware address (client hardware address, CHADDR)

CHADDR is a field in a DHCP packet that indicates hardware information of a client, and serves as a unique identifier of the client. CHADDR has a length of 16 bytes. When sending a DHCP request, the client may fill in the DHCP request with a hardware address of the client. For Ethernet, CHADDR is a MAC address of a network interface.

### 3. Virtual private cloud (virtual private cloud, VPC)

VPC is an isolated virtual network environment that is constructed by resources such as cloud servers, cloud containers, or cloud databases and that is independently configured and managed by tenants, and can improve security of cloud resources of the tenants and simplify network deployment of the tenants. The tenants may deploy cloud resources such as cloud servers, cloud databases, and cloud storage in VPCs on demand. The VPCs provides various network service functions such as subnets, security groups, network access control lists (access control list, ACL), routing tables, and domain name systems (domain name system, DNS), and also provides external network access capabilities, for example, inter-VPC access based on VPC peering connections, public network access based on public IP, and VPC-local mutual access based on VPNs and dedicated gateways.

### 4. Elastic cloud server (elastic cloud server, ECS)

ECS is a basic computing component that includes a central processing unit (central processing unit, CPU), memory, an operating system, and a cloud hard disk, featuring on-demand availability and elastic scalability.

### 5. Elastic network interface (elastic network interface, ENI)

ENI has a globally unique media access control address (media access control address, MAC), which is used to bind to a cloud server to provide a network service capability. The ENI may be understood as a virtual network interface, which supports user-defined and random IP address assignment.

### 6. Tenant

The "tenant" is a logical concept. For example, after an individual or enterprise registers an account on a public cloud platform, the platform considers the individual or enterprise to be a "tenant". A cloud system allocates cloud resources on a "tenant" basis. Generally, the tenant may lease, on a cloud computing platform, services provided by a cloud service provider. The tenant needs to provide identity information, contact information, and account number information for paying a cloud service rental.

It should be understood that the tenant of the cloud service may be an individual, an enterprise, a school, a hospital, an administrative agency, or the like.

### 7. Cloud management platform

The cloud management platform may be configured to provide an access interface (such as an interface or an application programming interface (application program interface, API)). A tenant may operate a client to remotely access the access interface, to register a cloud account and a password on the cloud management platform and log in to the cloud management platform. After the cloud account and the password are successfully authenticated by the cloud management platform, the tenant may further pay to select and purchase a virtual machine of a specific specification (processor, memory, or disk) on the cloud management platform. After the purchasing with payment succeeds, the cloud management platform provides a remote login account and password of the purchased virtual machine, and the client may remotely log in to the virtual machine, and install and run an application of the tenant in the virtual machine.

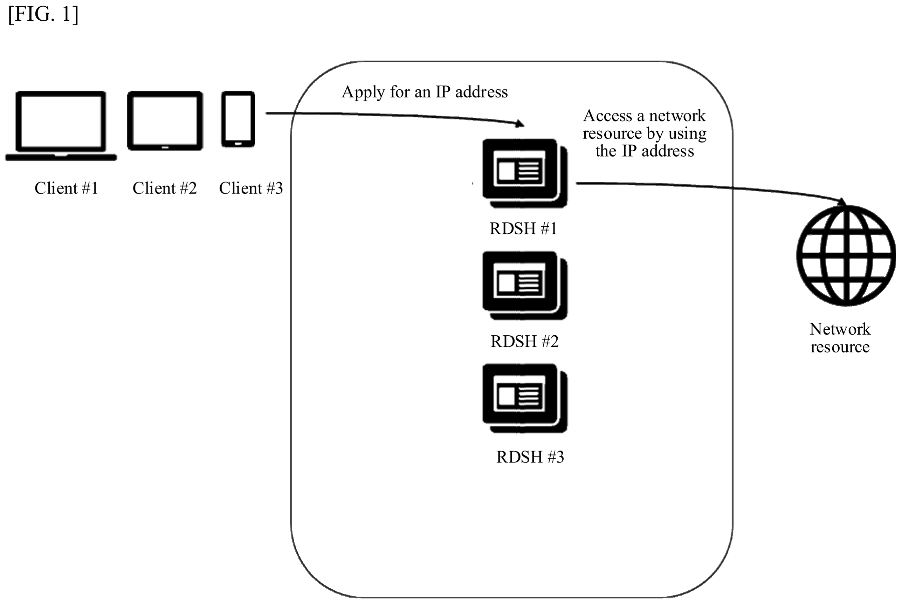

A cloud server is one of the most popular computing resource service forms. Especially in the era of cloud computing, the cloud server is widely used and can be configured to host various applications such as websites, application programs, and databases. When the cloud server is used, a plurality of internet protocol (internet protocol, IP) addresses need to be configured sometimes to extend services of an application program. For example, when a Web server cluster is constructed, a plurality of services with different network properties are required, or different clients need to access the internet, a plurality of IP addresses need to be configured on the cloud server. FIG. 1 is a diagram of a scenario to which this application is applicable. As shown in FIG. 1, in a cloud service system, a plurality of clients, for example, a client #1, a client #2, and a client #3, actually need to separately apply to remote desktop session host software (remote desktop session host software, RDSH) for different IP addresses, and then access network resources based on the different IP addresses. However, in an existing solution, one or more IP addresses may be obtained through manual static configuration, but such an approach is very inconvenient in actual use. For example, in some scenarios, when a tenant may temporarily need a large quantity of IP addresses, the tenant needs to perform static configuration before using them. This is very inconvenient and severely affects tenant's service experience. Therefore, in cloud service systems, there is a need for a method for obtaining a plurality of internet protocol addresses to ensure tenants' service experience.

In view of this, this application provides a communication method. A first DHCP server that is configured to allocate a plurality of internet protocol IP addresses to an elastic network interface of a first ECS may be configured based on first configuration information of a tenant, so that in a cloud service system, the elastic network interface of the first ECS can dynamically obtain the plurality of IP addresses by using the DHCP server, thereby facilitating use of the tenant and ensuring tenant's service experience.

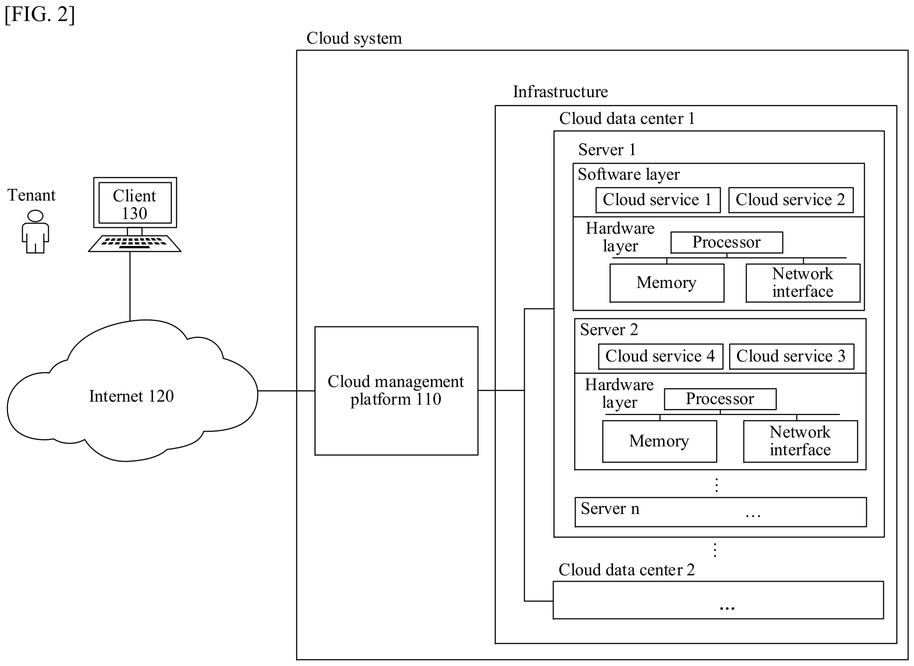

The communication method provided in embodiments of this application may be applied to a cloud service scenario, and is performed by a cloud management platform in the cloud service scenario. The following first describes the cloud service scenario in detail with reference to FIG. 2.

FIG. 2 is a block diagram of a cloud scenario to which an embodiment of this application is applicable. As shown in FIG. 2, the cloud scenario may include a cloud management platform 110, an internet 120, and a client 130.

As shown in FIG. 2, the cloud management platform 110 is configured to manage an infrastructure that provides a plurality of cloud services. The infrastructure includes a plurality of cloud data centers, each cloud data center includes a plurality of servers, and each server includes a cloud service resource to provide a corresponding cloud service for a tenant. In this embodiment of this application, the cloud service resource may be a cloud database.

The cloud management platform 110 may be located in the cloud data center, and may provide an access interface (such as an interface or an application programming interface (application program interface, API)). The tenant may operate the client 130 to remotely access the access interface, to register a cloud account and a password on the cloud management platform 110 and log in to the cloud management platform 110. After the cloud account and the password are successfully authenticated by the cloud management platform 110, the tenant may further pay to select and purchase a virtual machine of a specific specification (processor, memory, or disk) on the cloud management platform 110. After the purchasing with payment succeeds, the cloud management platform 110 provides a remote login account and password of the purchased virtual machine, and the client 130 may remotely log in to the virtual machine, and install and run an application of the tenant in the virtual machine. Therefore, the tenant may create, manage, log in to, and operate the virtual machine in the cloud data center by using the cloud management platform 110.

Functions of the cloud management platform 110 include but are not limited to a tenant console, a computing management service, a network management service, a storage management service, an authentication service, and an image management service. The tenant console provides an interface or an API to interact with the tenant. The computing management service is used for managing servers and bare metal servers running a virtual machine and a container. The network management service is used for managing network services (such as gateways and firewalls). The storage management service is used for managing storage services (such as data bucket services). The authentication service is used for managing tenant accounts and passwords. The image management service is used for managing virtual machine images. The tenant may use the client 130 to log in to the cloud management platform 110 over the internet 120 to manage a leased cloud service.

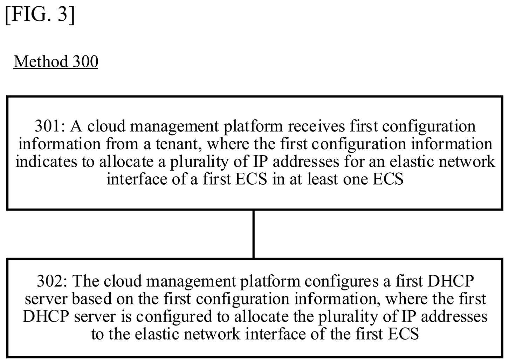

FIG. 3 is a schematic flowchart of a communication method 300 according to this application. The method may be applied to a cloud management platform. The cloud management platform is configured to manage an infrastructure that provides a cloud service. The infrastructure includes at least one virtual private cloud VPC, and each virtual private cloud VPC includes at least one elastic cloud server ECS. As shown in FIG. 3, the method includes the following steps.

301: The cloud management platform receives first configuration information from a tenant, where the first configuration information indicates to configure a plurality of IP addresses for an elastic network interface of a first ECS in the at least one ECS.

It should be understood that, generally, attribute information of an ECS includes a VPC network to which the ECS belongs. In other words, when the tenant specifies an ECS to enable a capability of requesting a plurality of IP addresses to be allocated, the tenant may view, in attribute information of the ECS, a VPC network to which the ECS belongs.

302: The cloud management platform configures a first DHCP server based on the first configuration information, where the first DHCP server is configured to allocate the plurality of IP addresses to the elastic network interface of the first ECS.

It should be understood that, in this application, the elastic cloud server (elastic compute service, ECS) may also be referred to as a "virtual machine", an "elastic instance", or the like, and has different names in different cloud service providers.

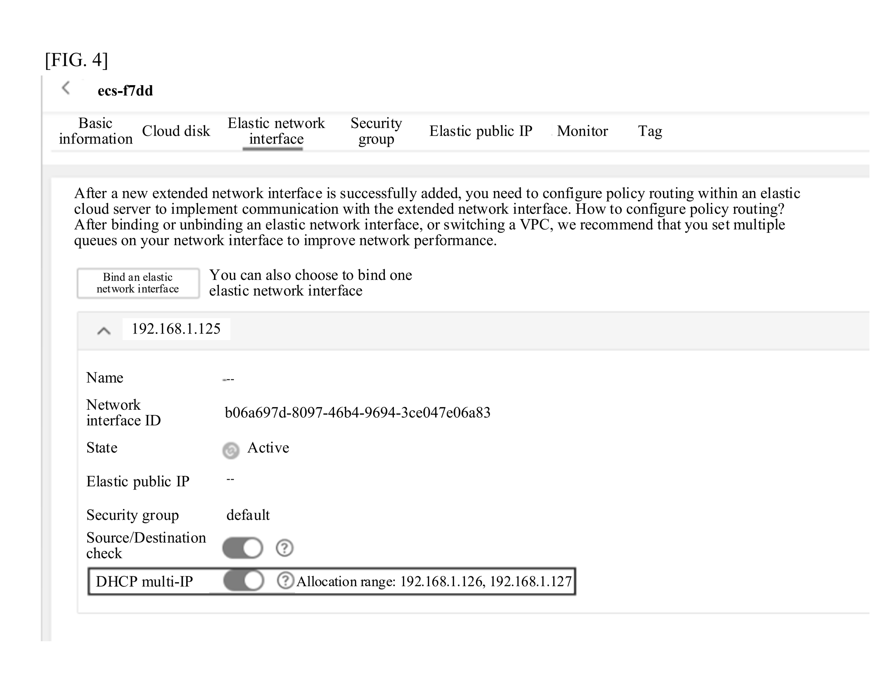

In this application, the tenant may specify an ECS in a VPC to request a plurality of IP addresses to be allocated, and the cloud management platform may configure the first DHCP server to allocate the plurality of IP addresses to the ECS. FIG. 4 is a diagram of a tenant interface in a cloud service system according to this application. As shown in FIG. 4, for example, the tenant may specify an elastic network interface of an ECS in a VPC to enable a capability of a DHCP for a plurality of IP addresses. For example, in the example shown in FIG. 4, once a button in a box is enabled, it indicates that the elastic network interface of the ECS enables the capability of the DHCP for the plurality of IP addresses.

In a possible implementation, the cloud management platform may receive second configuration information from the tenant, where the second configuration information includes: a range of the plurality of IP addresses entered by the tenant, and a quantity of the plurality of IP addresses entered by the tenant and/or the plurality of IP addresses entered by the tenant; and the cloud management platform may configure the second configuration information for the first DHCP server.

For example, the tenant may further specify the range of the plurality of IP addresses of the elastic network interface of the elastic cloud server. For example, in the example shown in FIG. 4, the range of IP addresses of the elastic network interface (for example, an ID of the elastic network interface is b06a697d-8097-46b4-9694-3ce047e6a83) of the elastic cloud server (for example, an ID of the elastic cloud server is ecs-f7dd) is 192.168.1.126 to 192.168.1.127.

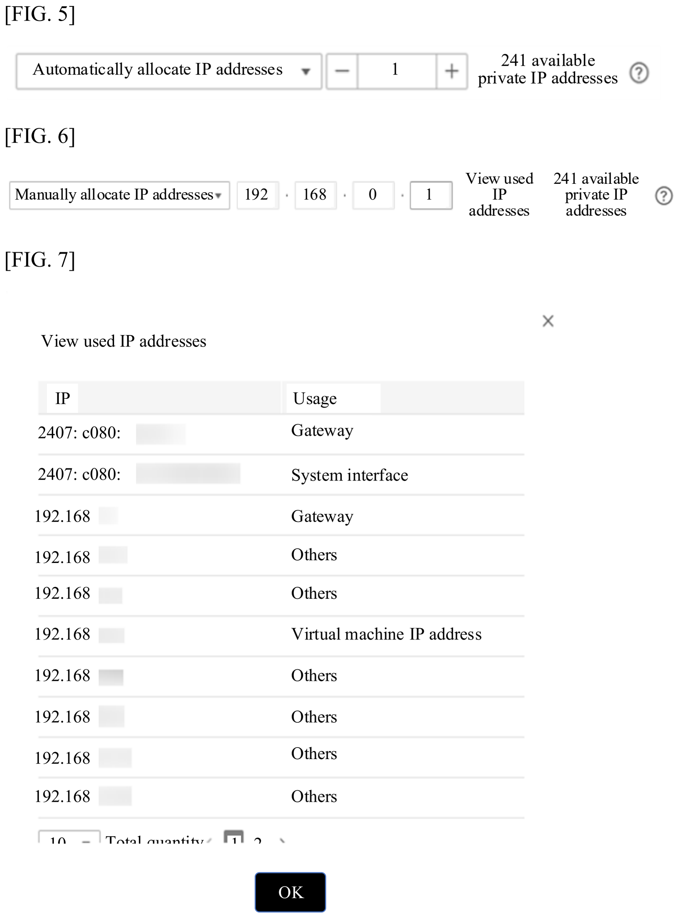

Specifically, after the tenant specifies the range of IP addresses, the tenant may manually allocate IP addresses, or the VPC may automatically allocate IP addresses. For example, in this application, the plurality of IP addresses can be allocated in a subnet to which the elastic network interface currently belongs. The plurality of IP addresses of the elastic network interface may be automatically allocated by the DHCP server, or may be manually allocated by the tenant. For example, as shown in FIG. 5, in an automatic allocation manner, the tenant needs to specify a quantity of IP addresses that need to be allocated, and then the DHCP server may automatically allocate available private IP addresses in the subnet. For example, as shown in FIG. 6, in a manual allocation manner, the tenant may manually fill in IP addresses. For example, the tenant may manually fill in a plurality of IP addresses. Specifically, as shown in FIG. 7, before manually filling in the IP addresses, the tenant may further view currently used IP addresses, and then manually fill in unused IP addresses in the subnet, so as to allocate the plurality of IP addresses to the elastic network interface of the ECS.

In a possible implementation, the first dynamic host configuration protocol DHCP server receives a plurality of first request messages from the elastic network interface of the first elastic cloud server ECS, where each first request message is used to request one IP address to be allocated; the first dynamic host configuration protocol DHCP server determines, based on the plurality of first request messages and the configured second configuration information, the IP address corresponding to each first request message; and the first dynamic host configuration protocol DHCP server sends a plurality of first response messages to the elastic network interface of the first elastic cloud server ECS, where each response message carries one IP address, and the plurality of first response messages are in one-to-one correspondence with the plurality of first request messages.

Further, considering that one elastic network interface has one MAC address, DHCP request messages cannot be filled in with the MAC address, because the DHCP server considers that the DHCP request messages are the same and allocates only one IP address. In this case, the DHCP request messages (an example of the first request message) may carry hardware addresses actually corresponding to clients, to distinguish between the DHCP request messages, and obtain different IP addresses respectively.

It should be understood that, generally, in some scenarios, a client hardware address needs to be managed and generated by each client. In some other scenarios, a client hardware address may be allocated and specified by the tenant.

It may also be understood that the DHCP server determines, based on the client hardware address carried in each DHCP request message, the IP address corresponding to each request message, where the IP address corresponds to the client hardware address. It may also be understood that the plurality of IP addresses allocated by the DHCP server are in one-to-one correspondence with the plurality of client hardware addresses, that is, each client hardware address may correspond to one IP address.

In this application, the cloud management platform may obtain a first mapping relationship, where the first mapping relationship includes a mapping relationship between the plurality of IP addresses and the plurality of client hardware addresses, and the plurality of IP addresses are in one-to-one correspondence with the plurality of client hardware addresses; and the cloud management platform may display the first mapping relationship to the tenant.

In a possible implementation, the cloud management platform may send a query message to the first dynamic host configuration protocol DHCP server, where the query message is used to query allocation information of the plurality of IP addresses; the cloud management platform may receive a response message from the first dynamic host configuration protocol DHCP server, where the response message carries the first mapping relationship, and the first mapping relationship includes the one-to-one correspondence between the plurality of IP addresses and the plurality of client hardware addresses; and the cloud management platform may display the first mapping relationship to the tenant based on the response message.

In another possible implementation, the first dynamic host configuration protocol DHCP server may periodically report the first mapping relationship to the cloud management platform, and the cloud management platform may display the received first mapping relationship to the tenant.

Specifically, a DHCP deployment form may be a distributed deployment architecture, or may be a centralized deployment architecture. This is separately described below.

### Method 1: Distributed architecture

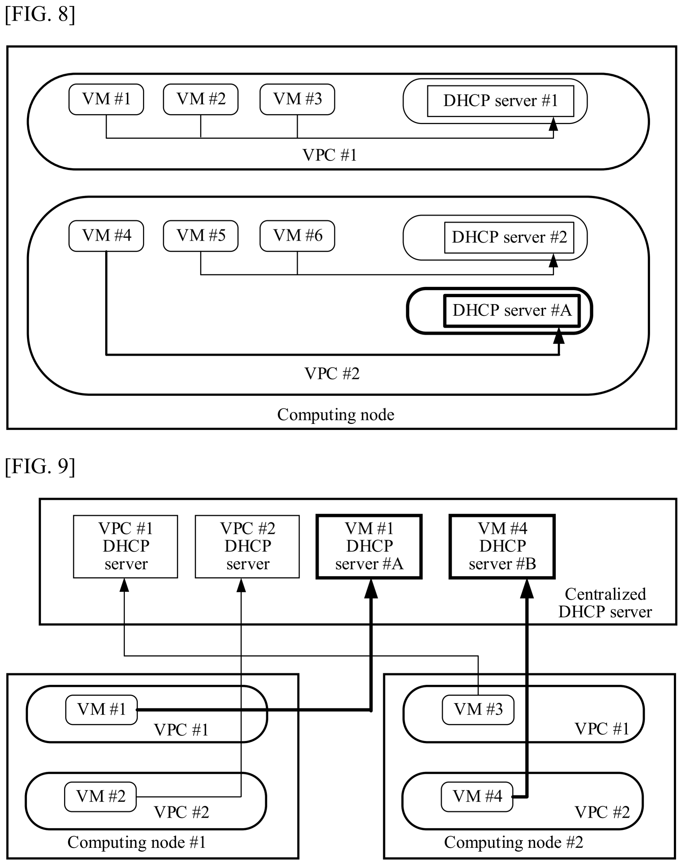

For example, FIG. 8 shows a distributed architecture. In the distributed architecture, a computing node includes two VPCs: a VPC #1 and a VPC #2, and different VPCs are isolated from each other, because private network addresses of the different VPCs may overlap (for example, both are 192.168.0.0/24). For example, DHCP servers are preconfigured in both VPCs, and are denoted as a DHCP server #1 and a DHCP server #2. The DHCP server #1 is configured to allocate IP addresses to a VM #1 to a VM #3 in the VPC #1. It should be noted that the DHCP server #1 can allocate only one IP address to each VM in the VM #1 to the VM #3. Similarly, the DHCP server #2 is configured to allocate IP addresses to a VM #5 and a VM #6 in the VPC #1. It should be noted that the DHCP server #1 can allocate only one IP address to each VM in the VM #5 and the VM #6. In this case, if the tenant specifies a VM in a VPC to enable a function of requesting a DHCP server to allocate a plurality of IP addresses, the cloud management platform additionally starts an independent DHCP server for the VM, so that the DHCP server can dynamically allocate a plurality of IP addresses to the VM. As shown in FIG. 8, assuming that the tenant specifies a VM #4 (an example of the first ECS) in the VPC #2 to enable a function of requesting a DHCP server to allocate a plurality of IP addresses, the cloud management platform may independently configure a DHCP server #A for the VM #4 in the computing node, and the DHCP server #A may dynamically allocate a plurality of IP addresses to the VM #4.

### Method 2: Centralized architecture

FIG. 9 shows a centralized architecture. The centralized architecture includes a DHCP server cluster, and the DHCP server cluster includes a plurality of DHCP servers. The centralized architecture shown in FIG. 9 includes a computing node #1 and a computing node #2. A VPC #1 provides network services for different computing nodes, and a VPC #2 also provides network services for different computing nodes. For example, a VM #1 and a VM #3 belong to a VPC #1 network, but the VM #1 is deployed in the computing node #1, and the VM #3 is deployed in the computing node #2. For example, a VM #2 and a VM #4 belong to a VPC #2 network, but the VM #2 is deployed in the computing node #1, and the VM #4 is deployed in a computing node #4. If the tenant specifies a VM in a VPC to enable a function of requesting a DHCP server to allocate a plurality of IP addresses, the cloud management platform additionally configures a DHCP server for the VM, so that the DHCP server can dynamically allocate IP addresses to the VM. As shown in FIG. 9, assuming that the tenant specifies both the VM #4 (an example of the first ECS) in the VPC #2 and the VM #1 (another example of the first ECS) in the VPC #1 to enable a function of requesting a DHCP to allocate a plurality of IP addresses, the cloud management platform may configure one DHCP server for each of the two VMs. For example, the cloud management platform may configure a DHCP server #A for the VM #1, and the cloud management platform configures a DHCP server #B for the VM #2. The DHCP server #A may allocate a plurality of IP addresses to the VM #1, and the DHCP server #B may dynamically allocate a plurality of IP addresses to the VM #4.

For example, the DHCP server cluster may be a computing node, or the DHCP server cluster may be a network node, or the DHCP server cluster may be a node of another type. This is not limited.

The solution proposed in the method 300 may also be understood as "exclusive DHCP server". To be specific, an ECS in a VPC is associated with a DHCP server. For example, it may be understood that the cloud management platform may independently allocate a DHCP server to an elastic network interface of each ECS. Considering different actual application scenarios, the following method 900 proposes a solution of "shared DHCP IP address pool". To be specific, a plurality of ECSs in a VPC may share a same DHCP IP address pool, and the DHCP IP address pool may be used to allocate a plurality of IP addresses to an elastic network of each ECS in the plurality of ECSs included in the VPC.

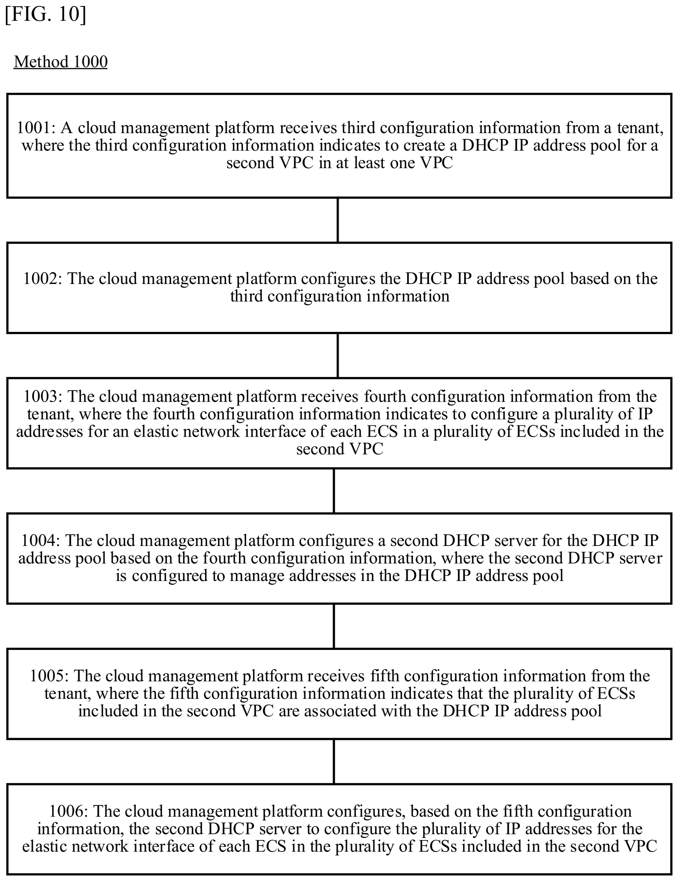

FIG. 10 is a schematic flowchart of a communication method 1000 according to this application. The method may be applied to a cloud management platform. The cloud management platform is configured to manage an infrastructure that provides a cloud service. The infrastructure includes at least one virtual private cloud VPC, and each virtual private cloud VPC includes at least one elastic cloud server ECS. As shown in FIG. 10, the method includes the following steps.

1001: The cloud management platform receives third configuration information from a tenant, where the third configuration information indicates to create a DHCP IP address pool for a second VPC in the at least one VPC.

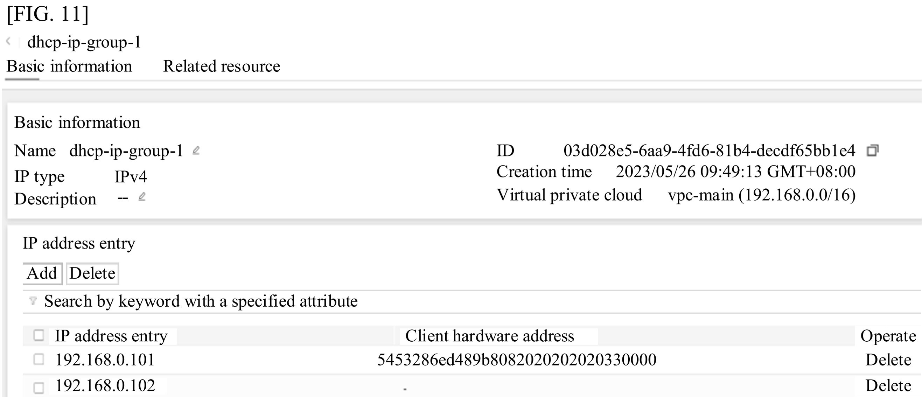

As shown in FIG. 11, the tenant may specify a DHCP IP address pool created for a VPC.

1002: The cloud management platform configures the DHCP IP address pool based on the third configuration information.

1003: The cloud management platform receives fourth configuration information from the tenant, where the fourth configuration information indicates to configure a plurality of IP addresses for an elastic network interface of a second ECS.

In this application, the second elastic cloud server ECS is one of elastic cloud servers ECSs included in the second virtual private cloud VPC.

It may also be understood that, in this application, the DHCP IP address pool may be used to allocate a plurality of IP addresses to each ECS in all the ECSs included in the second VPC. However, a specific ECS that enables a capability of requesting a plurality of IP addresses to be allocated needs to be specified by the tenant. In other words, in this application, a user may specify one or more ECSs in the second VPC to enable the capability.

1004: The cloud management platform configures a second DHCP server for the DHCP IP address pool based on the fourth configuration information, where the second DHCP server is configured to manage addresses in the DHCP IP address pool.

1005: The cloud management platform receives fifth configuration information from the tenant, where the fifth configuration information indicates that the plurality of ECSs included in the second VPC are associated with the DHCP IP address pool.

1006: The cloud management platform configures, based on the fifth configuration information, the second DHCP server to configure the plurality of IP addresses for an elastic network interface of each ECS in the plurality of ECSs included in the second VPC.

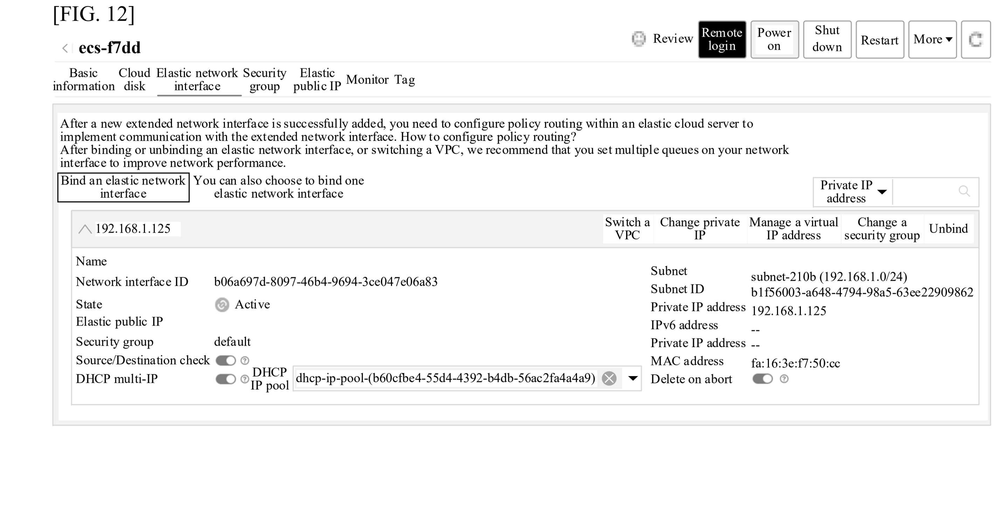

As shown in FIG. 12, the tenant may specify an elastic network interface of an elastic cloud server ECS (or several ECSs) in a VPC to enable a capability of requesting a plurality of IP addresses from a DHCP IP address pool, and the tenant may specify a specific created DHCP IP address pool with which the elastic network interface of the elastic cloud server ECS is associated. It should be noted that, generally, because a DHCP IP address pool is created for a VPC, all ECSs in the VPC are associated with the DHCP IP address pool subsequently.

In this application, the cloud management platform may create a dedicated DHCP server for the DHCP IP address pool based on the fourth configuration information. The DHCP server may manage addresses in the DHCP IP address pool, and is configured to allocate a plurality of IP addresses to the elastic network interface of each ECS in the plurality of ECSs in the second VPC. It may also be understood that the plurality of ECSs may share a same DHCP IP address pool. To be specific, the second DHCP server may allocate the plurality of IP addresses to the elastic network interface of each ECS in the plurality of ECSs.

In this application, in this scenario, the DHCP IP address pool may be shared by the servers. It may also be understood that a plurality of ECSs in a same VPC may share IP addresses in the DHCP IP address pool. In this case, for example, an ECS #1, an ECS #2, and an ECS #3 in the second VPC may share a same DHCP IP address pool. It may also be understood that the second DHCP server may allocate the plurality of IP addresses to the plurality of ECSs in the second VPC at the same time.

In this application, the DHCP IP address pool is used to store IP addresses. A range of the stored IP addresses, a quantity of IP addresses, and specific IP addresses included in the IP address pool are configured by the tenant. This application proposes the DHCP IP address pool to maximize IP address utilization and avoid IP address fragmentation. The DHCP IP address pool may be used to reclaim an IP address that is not required by a client, and allocate the IP address to another client for use in time, thereby maximizing resource utilization and saving IP address resources.

In a possible implementation, the cloud management platform may receive sixth configuration information from the tenant, where the sixth configuration information is used to configure information about the internet protocol IP addresses for the DHCP IP address pool, and the sixth configuration information includes: a range of the plurality of IP addresses entered by the tenant, and a quantity of the plurality of IP addresses entered by the tenant and/or the plurality of IP addresses entered by the tenant; and configure the sixth configuration information for the second DHCP server. For example, the tenant may view currently used IP addresses, and then add unused IP addresses to the DHCP IP address pool. Further, the cloud management platform may configure the sixth configuration information for the second DHCP server. Specifically, the method 900 also supports automatic IP address allocation and manual IP address allocation. For specific implementation, refer to the related descriptions of IP address allocation in the foregoing method 300. Details are not described again.

In a possible implementation, the second DHCP server receives a plurality of second request messages from the elastic network interface of the second elastic cloud server ECS, where each second request message is used to request one IP address to be allocated; the second DHCP server determines, based on the plurality of second request messages and the configured fifth configuration information, the IP address corresponding to each second request message; and the second DHCP server sends a plurality of second response messages to the elastic network interface of the second ECS, where each second response message carries one IP address, and the plurality of second response messages are in one-to-one correspondence with the plurality of second request messages.

Further, considering that one elastic network interface has one MAC address, DHCP request messages cannot be filled in with the MAC address, because the DHCP server considers that the DHCP request messages are the same and allocates only one IP address. In this case, the DHCP request messages (an example of the second request message) may carry hardware addresses actually corresponding to clients, to distinguish between the DHCP request messages, and obtain different IP addresses respectively.

It should be understood that, generally, in some scenarios, a client hardware address needs to be managed and generated by each client. In some other scenarios, a client hardware address may be allocated and specified by the tenant.

It may also be understood that the DHCP server determines, based on the client hardware address carried in each DHCP request message, the IP address corresponding to each request message, where the IP address corresponds to the client hardware address. It may also be understood that the plurality of IP addresses allocated by the DHCP server are in one-to-one correspondence with the plurality of client hardware addresses, that is, each client hardware address may correspond to one IP address.

In a possible implementation, the cloud management platform may send a query message to the second dynamic host configuration protocol DHCP server, where the query message is used to query allocation information of the plurality of IP addresses; the cloud management platform may receive a response message from the second dynamic host configuration protocol DHCP server, where the response message carries the second mapping relationship, and the second mapping relationship includes the one-to-one correspondence between the plurality of IP addresses and the plurality of client hardware addresses; and the cloud management platform may display the second mapping relationship to the tenant based on the response message.

Specifically, a DHCP deployment form may be a distributed deployment architecture, or may be a centralized deployment architecture. This is separately described below.

### Method 1: Distributed architecture

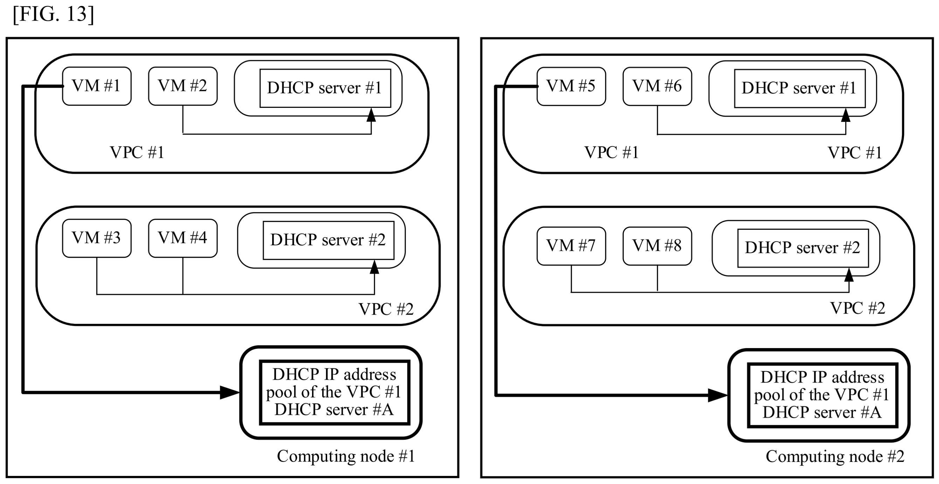

For example, the VPC may start an independent DHCP server for the DHCP IP address pool created by the tenant, and support a plurality of ECSs to separately request IP addresses from the DHCP server dynamically, and the tenant may limit a range of IP addresses. FIG. 13 is used as an example. It is assumed that there are two computing nodes: a computing node #1 and a computing node #2. A VPC #1 provides network services for different computing nodes, and a VPC #2 also provides network services for different computing nodes. For example, a VM #1, a VM #2, a VM #5, and a VM #6 belong to a VPC #1 network, but the VM #1 and the VM #2 are deployed in the computing node #1, and the VM #5 and the VM #6 are deployed in the computing node #2. A VM #3, a VM #4, a VM #7, and a VM #8 belong to a VPC #2 network, but the VM #3 and the VM #4 are deployed in the computing node #1, and the VM #7 and the VM #8 are deployed in the computing node #2. The VM #1 in the VPC #1 enables a capability of requesting a plurality of IP addresses from the DHCP IP address pool, and the VM #5 in the VPC #2 enables a capability of applying for a plurality of IP addresses from the DHCP IP address pool. For example, in this case, the cloud management platform may independently start a DHCP server for the DHCP IP address pool. For example, the DHCP server is a DHCP #A, and the DHCP server is configured to allocate a plurality of IP addresses to the VM #1. In addition, because the VM #5 is also associated with the DHCP IP address pool, the DHCP server may also allocate a plurality of IP addresses to the VM #5. It may also be understood that the DHCP server may allocate a plurality of IP addresses to the VM #1 and the VM #5 at the same time. It should be understood that, because the VM #1 is deployed in the computing node #1 and the VM #5 is deployed in the computing node #2, it may also be understood that the DHCP server is deployed in the computing node #1, and a DHCP server with a same configuration as the DHCP service may be deployed in the computing node #2. In this case, although the computing nodes both have the DHCP servers, configurations of the DHCP servers are actually the same, in other words, the configurations of the two DHCP servers are synchronized.

It should be noted that, in this scenario, allocated IP addresses need to be synchronized for a same DHCP server between different computing nodes, to prevent the IP addresses from being allocated to different VMs at the same time.

### Architecture #B: Centralized architecture

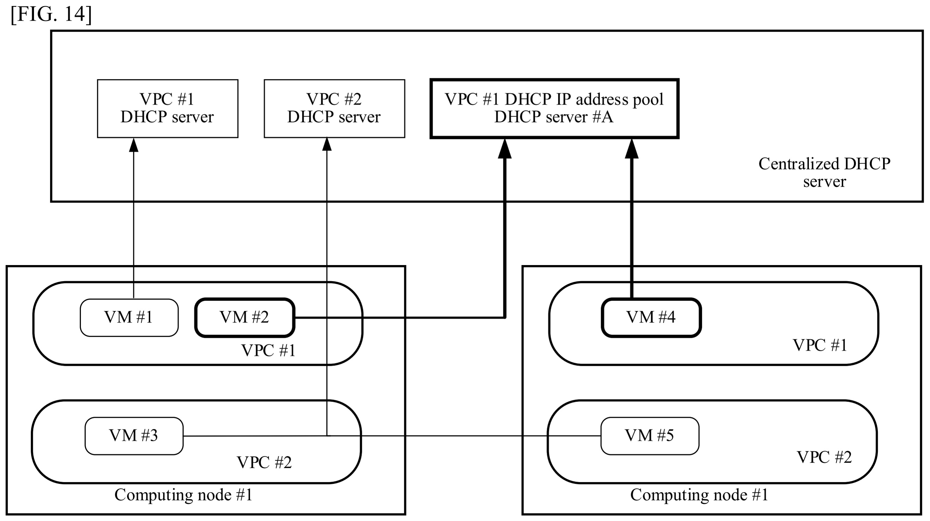

In the centralized architecture, an independent DHCP server may be started for the DHCP IP address pool in the DHCP server cluster, and the DHCP server can dynamically allocate a plurality of IP addresses to a plurality of ECSs. FIG. 14 is used as an example. It is assumed that there are two computing nodes: a computing node #1 and a computing node #2. The tenant specifies each ECS in a plurality of ECSs in a VPC #1 to enable a capability of applying for a plurality of IP addresses from the DHCP IP address pool. For example, a VM #2 and a VM #4 may request a plurality of IP addresses from the DHCP IP address pool. Because the tenant may specify that the plurality of ECSs included in the VPC #1 are associated with the DHCP IP resource pool, a DHCP server #A may separately allocate a plurality of IP addresses to the VM #2 and the VM #4. It may also be understood that the DHCP server may allocate the plurality of IP addresses to the VM #2 and the VM #4 at the same time.

For example, the DHCP server cluster may be a computing node, or the DHCP server cluster may be a network node, or the DHCP server cluster may be a node of another type. This is not limited.

In this application, the DHCP server may allocate IP addresses within the range specified by the tenant. If all IP addresses have been allocated, the ECS cannot request IP addresses. It should be noted that, in this application, the tenant may view IP addresses that have been dynamically allocated by the DHCP server currently.

In this application, the tenant may also adjust the range of IP addresses. For example, the tenant may delete an IP address, but the tenant can delete only an unallocated IP address, to prevent the IP address from being deleted by mistake. If the tenant wants to delete an allocated IP address, a DHCP client needs to execute a DHCP IP address release process, and abandon the IP address, so that the DHCP server returns the IP address to an unallocated state. For another example, the tenant device may add an IP address. For example, the tenant device may add an IP address within a specification limitation range allowed by a VM.

Generally, a quantity of IP addresses that can be applied for by a single virtual machine is limited. Generally, the quantity of IP addresses that can be applied for by a single virtual machine is related to a specification of the virtual machine (for example, a 1U2G virtual machine can apply for only two IP addresses, and a 2U4G virtual machine can apply for four IP addresses). For example, one virtual machine may apply for a maximum of 50 IP addresses.

The following separately uses three scenarios as specific examples for description.

### Scenario 1

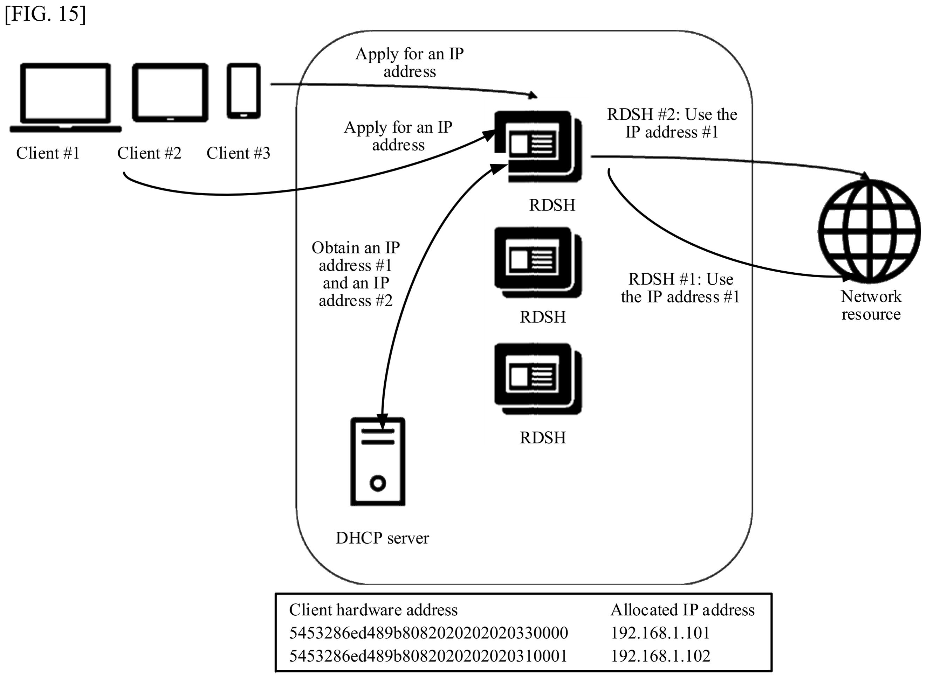

FIG. 15 shows a scenario in which a plurality of remote desktop protocols (remote desktop protocol, RDP) are generally used in a Windows RDSH. In this scenario, when applying for IP addresses for the RDPs, a Windows system automatically generates different hardware addresses instead of using MAC addresses of elastic network interfaces of the RDPs. Each DHCP request message may carry a respective hardware address. Therefore, a plurality of IP addresses may be obtained from the DHCP server by using a plurality of DHCP request messages. As shown in FIG. 13, a "mapping relationship" (the "mapping relationship" may also be understood as a "correspondence") exists between a hardware address of each client and an IP address allocated by the DHCP server to each client, and the DHCP client may record the mapping relationship.

### Scenario 2

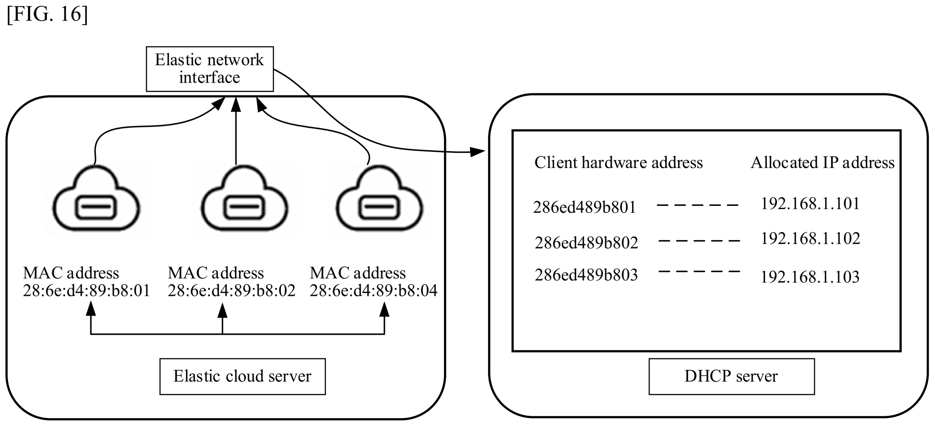

FIG. 16 shows a nested virtualization scenario. As shown in FIG. 15, in the nested virtualization scenario, three small VMs are virtualized in an elastic server. The three VMs in the elastic server are independent and have independent MAC addresses. After being started, the VMs respectively send DHCP request messages to the DHCP server through elastic network interfaces. In this case, client hardware addresses in the DHCP request messages are respective MAV addresses of the VMs. After receiving the DHCP request messages, the DHCP server allocates, to the VMs, IP addresses within the range specified by the tenant, and records a mapping relationship between the client hardware addresses and the allocated IP addresses.

### Scenario 3

For example, a single network interface in a Linux virtual machine obtains a plurality of IP addresses. In the Linux virtual machine, the tenant needs to manage different client hardware addresses, and obtain different IP addresses based on the different client hardware addresses. A udhcpc command is used as an example. The tenant may manually specify client hardware addresses, and obtain IP addresses allocated by DHCP to the specified network interface based on the different client hardware addresses. For example, the allocated IP addresses are "udhcpc -i eth0:1 -x 0x3d:0100BEEFC0FFEE".

It may be understood that the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the computing device may be divided into functional modules according to the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

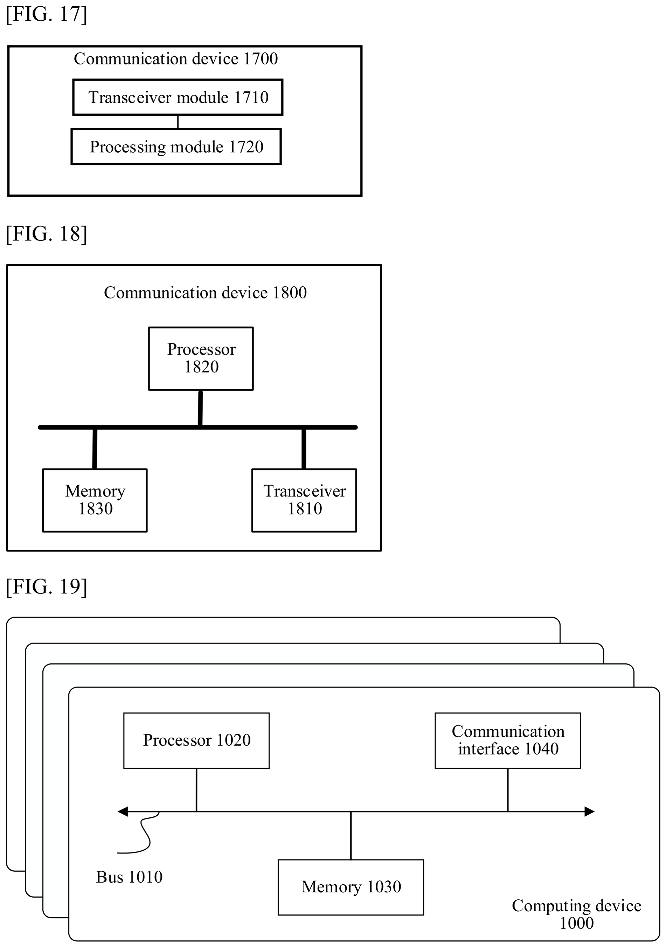

FIG. 17 is a block diagram of a communication device 1700 according to an embodiment of this application. As shown in the figure, the computing device 1700 may include a transceiver module 1710 and a processing module 1720.

The foregoing modules are separately configured to perform steps in the foregoing methods. Details are not described herein again.

It should be understood that the communication device 1700 herein is implemented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The communication device 1700 in the foregoing solutions has functions of implementing corresponding steps in the method 300 and the method 1000. The functions may be implemented by hardware, or may be implemented by hardware executing corresponding software. The hardware or software includes one or more modules corresponding to the foregoing functions. For example, a determining unit may be replaced with a processor, to separately perform receiving and sending operations and related processing operations in the method embodiments. In addition, the determining unit may be a processing circuit.

In a possible implementation, the device 1700 may be the communication device used in the cloud management platform in the method 300 and the method 1000, and the device is configured to perform actions in the method 300 and the method 1000.

In another possible implementation, the device 1700 may be the cloud management platform in the method 300 and the method 1000, and the cloud management platform is configured to perform actions in the method 300 and the method 1000.

It should be noted that the communication device in FIG. 17 may be the cloud management platform (or the communication device in the cloud management platform) in the foregoing method embodiments, or may be a chip or a chip system corresponding to the cloud management platform (or the communication device in the cloud management platform), for example, a system on chip (system on chip, SoC). The processing unit is a processor, a microprocessor, or an integrated circuit integrated on the chip. This is not limited herein.

FIG. 18 is a block diagram of another communication device 1800 according to an embodiment of this application. As shown in the figure, the device 1800 includes at least one processor 1820. The processor 1820 is coupled to a memory, and is configured to execute instructions stored in the memory, to send a signal and/or receive a signal. Optionally, the device 1800 further includes the memory 1830, configured to store the instructions. Optionally, the device 1800 further includes a transceiver 1810, and the processor 1820 controls the transceiver 1810 to send a signal and/or receive a signal.

It should be understood that the processor 1820 and the memory 1830 may be integrated into one processing device. The processor 1820 is configured to execute program code stored in the memory 1830 to implement the foregoing functions. During specific implementation, the memory 1830 may alternatively be integrated into the processor 1820, or may be independent of the processor 1820.

It should be further understood that the transceiver 1810 may include a transceiver (or referred to as a receiving machine) and a transmitter (or referred to as a transmitting machine). The transceiver may further include an antenna, and there may be one or more antennas. The transceiver 1810 may alternatively be a communication interface or an interface circuit.

Specifically, the processor 1820 in the device 1800 may correspond to the processing module 1720 in the device 1700. The transceiver 1810 in the device 1800 may correspond to the processing module 1710 in the device 1700.

In a solution, the device 1800 is configured to implement steps corresponding to the communication device used in the cloud management platform in the method 300 and the method 1000.

In another solution, the device 1800 is configured to implement steps corresponding to the cloud management platform in the method 300 and the method 1000.

For example, the processor 1820 is configured to execute a computer program or instructions stored in the memory 1830, to implement steps in the method 300 and the method 1000.

FIG. 19 is a diagram of an architecture of a computing device cluster according to an embodiment of this application. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone. As shown in FIG. 17, the computing device cluster includes at least one computing device 1000. A memory 1030 in the one or more computing devices 1000 in the computing device cluster may store a same instruction used for performing actions performed by the cloud management platform (or the communication device in the cloud management platform) in the method 300 and the method 1000.

In some possible implementations, memories 1030 in the one or more computing devices 1000 in the computing device cluster may alternatively respectively store some instructions used for performing actions performed by the cloud management platform (or the communication device in the cloud management platform) in the method 300 and the method 1000 described in the foregoing embodiments. In other words, a combination of the one or more computing devices 1000 may jointly execute instructions used for performing actions performed by the cloud management platform (or the communication device in the cloud management platform) described in the foregoing embodiments.

It should be noted that memories 1030 in different computing devices 1000 in the computing device cluster may store different instructions that are respectively used to perform some functions of the computing devices 1000. In other words, instructions stored in the memories 1030 in the different computing devices 1000 may implement functions of one or more of the transceiver module 1710 and the processing module 1720.

Alternatively, memories 1030 in different computing devices 1000 in the computing device cluster may store different instructions that are respectively used for performing some functions of the cloud management platform (or the communication device in the cloud management platform) corresponding to the communication devices 1700 and 1800. In other words, instructions stored in the memories 1030 in the different computing devices 1000 may implement functions of one or more of the transceiver module 1710 and the processing module 1720.

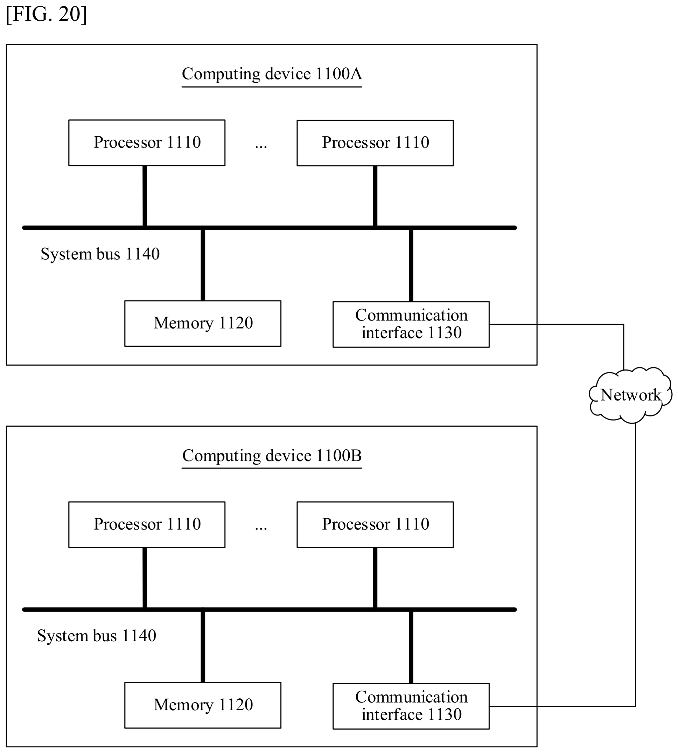

In some possible implementations, the one or more computing devices in the computing device cluster may be connected through a network. The network may be a wide area network, a local area network, or the like. FIG. 20 shows a possible implementation. As shown in FIG. 20, two computing devices 1100A and 1100B are connected over a network. Specifically, each computing device is connected to the network through a communication interface in the computing device.

It should be understood that functions of the computing device 1100A shown in FIG. 20 may alternatively be completed by a plurality of computing devices 1000. Similarly, functions of the computing device 1100B may also be completed by a plurality of computing devices 1000.

An embodiment further provides a computer program product including instructions. The computer program product may be software or a program product that includes the instructions and that can run on a computing device cluster or that can be stored in any usable medium. When the computer program product is run by the computing device cluster, the computing device cluster is enabled to perform the method provided above, or the computing device cluster is enabled to implement functions of the apparatus provided above.

An embodiment further provides a computer-readable storage medium. The computer-readable storage medium may be any usable medium that can be stored by a computing device, or a data storage device such as a data center, including one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like. The computer-readable storage medium includes instructions. When the instructions in the computer-readable storage medium are executed on the computing device, the computing device is enabled to perform the method provided above.

An embodiment further provides a computer-readable storage medium. The computer-readable storage medium may be any usable medium that can be stored by a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed by a computing device cluster, the computing device cluster is enabled to perform the method provided above.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a cloud management platform, the cloud management platform is configured to manage an infrastructure that provides a cloud service, the infrastructure comprises at least one virtual private cloud VPC, each virtual private cloud VPC comprises at least one elastic cloud server ECS, and the method comprises:
receiving first configuration information from a tenant, wherein the first configuration information indicates to configure a plurality of internet protocol IP addresses for an elastic network interface of a first elastic cloud server ECS in the at least one elastic cloud server ECS; and
configuring a first dynamic host configuration protocol DHCP server based on the first configuration information, wherein the first dynamic host configuration protocol DHCP server is configured to allocate the plurality of IP addresses to the elastic network interface of the first elastic cloud server ECS.

2. The method according to claim 1, wherein the method further comprises:
receiving second configuration information from the tenant, wherein the second configuration information comprises: a range of the IP addresses entered by the tenant, and a quantity of the plurality of IP addresses entered by the tenant and/or the plurality of IP addresses entered by the tenant; and
configuring the second configuration information for the first dynamic host configuration protocol DHCP server.

3. The method according to claim 2, wherein the method further comprises:
receiving, by the first dynamic host configuration protocol DHCP server, a plurality of first request messages from the elastic network interface of the first elastic cloud server ECS, wherein each first request message is used to request one IP address to be allocated;
determining, by the first dynamic host configuration protocol DHCP server based on the plurality of first request messages and the configured second configuration information, the IP address corresponding to each first request message; and
sending, by the first dynamic host configuration protocol DHCP server, a plurality of first response messages to the elastic network interface of the first elastic cloud server ECS, wherein each first response message carries one IP address, and the plurality of first response messages are in one-to-one correspondence with the plurality of first request messages.

4. The method according to claim 3, wherein each first request message carries one client hardware address, the plurality of IP addresses are allocated by the first dynamic host configuration protocol DHCP server to the elastic network interface of the first elastic cloud server ECS based on the plurality of client hardware addresses, and the plurality of IP addresses are in one-to-one correspondence with the plurality of client hardware addresses.

5. The method according to claim 4, wherein the method further comprises:
obtaining a first mapping relationship, wherein the first mapping relationship comprises a mapping relationship between the plurality of IP addresses and the plurality of client hardware addresses, and the plurality of internet protocol IP addresses are in one-to-one correspondence with the plurality of client hardware addresses; and
displaying the first mapping relationship to the tenant.

6. The method according to any one of claims 1 to 5, wherein
the first DHCP server is deployed in a first computing node, and the first computing node comprises the first elastic cloud server ECS; or
the first DHCP server is deployed in a DHCP server cluster, and the DHCP server cluster is a computing node or a network node.

7. A communication method, wherein the method is applied to a cloud management platform, the cloud management platform is configured to manage an infrastructure that provides a cloud service, the infrastructure comprises at least one virtual private cloud VPC, each private cloud VPC comprises a plurality of elastic cloud servers ECSs, and the method comprises:
receiving third configuration information from a tenant, wherein the third configuration information indicates to create a dynamic host configuration protocol internet protocol DHCP IP address pool for a second virtual private cloud VPC in the at least one virtual private cloud VPC;
configuring the dynamic host configuration protocol internet protocol DHCP IP address pool based on the third configuration information;
receiving fourth configuration information from the tenant, wherein the fourth configuration information indicates to configure a plurality of internet protocol IP addresses for an elastic network interface of a second elastic cloud server ECS in the at least one elastic cloud server ECS, and the second elastic cloud server ECS is one of elastic cloud servers ECSs comprised in the second virtual private cloud VPC;
configuring a second dynamic host configuration protocol DHCP server for the dynamic host configuration protocol internet protocol DHCP IP address pool based on the fourth configuration information, wherein the second dynamic host configuration protocol DHCP server is configured to manage addresses in the dynamic host configuration protocol internet protocol DHCP IP address pool;
receiving fifth configuration information from the tenant, wherein the fifth configuration information indicates that the plurality of elastic cloud servers ECSs comprised in the second virtual private cloud VPC are associated with the dynamic host configuration protocol internet protocol DHCP IP address pool; and
configuring, based on the fifth configuration information, the second dynamic host configuration protocol DHCP server to configure the plurality of IP addresses for an elastic network interface of each elastic cloud server ECS in the plurality of elastic cloud servers ECSs comprised in the second virtual private cloud VPC.

8. The method according to claim 7, wherein the method further comprises:
receiving sixth configuration information from the tenant, wherein the sixth configuration information is used to configure information about the IP addresses for the dynamic host configuration protocol internet protocol DHCP IP address pool, and the sixth configuration information comprises: a range of the plurality of IP addresses entered by the tenant, and a quantity of the plurality of IP addresses entered by the tenant and/or the plurality of IP addresses entered by the tenant; and
configuring the sixth configuration information for the second dynamic host configuration protocol DHCP server.

9. The method according to claim 7 or 8, wherein the method further comprises:
receiving, by the second dynamic host configuration protocol DHCP server, a plurality of second request messages from the elastic network interface of the second elastic cloud server ECS, wherein each second request message is used to request one IP address to be allocated;
determining, by the second dynamic host configuration protocol DHCP server based on the plurality of second request messages and the configured fifth configuration information, the IP address corresponding to each second request message; and
sending, by the second dynamic host configuration protocol DHCP server, a plurality of second response messages to the elastic network interface of the second elastic cloud server ECS, wherein each second response message carries one IP address, and the plurality of second response messages are in one-to-one correspondence with the plurality of second request messages.

10. The method according to claim 9, wherein each first request message carries one client hardware address, the plurality of IP addresses are allocated by the second dynamic host configuration protocol DHCP server to the elastic network interface of the second elastic cloud server ECS based on the plurality of client hardware addresses, and the plurality of IP addresses are in one-to-one correspondence with the plurality of client hardware addresses.

11. The method according to claim 10, wherein the method further comprises:
obtaining a second mapping relationship, wherein the second mapping relationship comprises a mapping relationship between the plurality of IP addresses and the plurality of client hardware addresses, and the plurality of IP addresses are in one-to-one correspondence with the plurality of client hardware addresses; and
displaying the second mapping relationship to the tenant.

12. The method according to any one of claims 7 to 11, wherein
the second dynamic host configuration protocol DHCP server is deployed in a second computing node, and the second computing node comprises the second elastic cloud server ECS; or
the second DHCP server is deployed in a DHCP server cluster, and the DHCP server cluster is a computing node or a network node.

13. A communication device, wherein the communication device is used in a cloud management
platform, the cloud management platform is configured to manage an infrastructure that provides a cloud service, the infrastructure comprises at least one virtual private cloud VPC, each virtual private cloud VPC comprises at least one elastic cloud server ECS, and the apparatus comprises a transceiver module and a processing module, wherein
the transceiver module is configured to receive first configuration information from a tenant, wherein the first configuration information indicates to configure a plurality of internet protocol IP addresses for an elastic network interface of a first elastic cloud server ECS in the at least one elastic cloud server ECS; and
the processing module is configured to configure a first dynamic host configuration protocol DHCP server based on the first configuration information, wherein the first dynamic host configuration protocol DHCP server is configured to allocate the plurality of IP addresses to the elastic network interface of the first elastic cloud server ECS.

14. The communication device according to claim 13, wherein
the transceiver module is configured to receive second configuration information from the tenant, wherein the second configuration information comprises: a range of the plurality of IP addresses entered by the tenant, and a quantity of the plurality of IP addresses entered by the tenant and/or the plurality of IP addresses entered by the tenant; and
the processing module is configured to configure the second configuration information for the first dynamic host configuration protocol DHCP server.

15. The communication device according to claim 13, wherein
the transceiver module is configured to obtain a first mapping relationship, wherein the first mapping relationship comprises a mapping relationship between the plurality of IP addresses and the plurality of client hardware addresses, and the plurality of IP addresses are in one-to-one correspondence with the plurality of client hardware addresses; and
the processing module is configured to display the first mapping relationship to the tenant.

16. The communication device according to any one of claims 13 to 15, wherein
the first DHCP server is deployed in a second computing node, and the second computing node comprises the second elastic cloud server ECS; or
the first DHCP server is deployed in a DHCP server cluster, and the DHCP server cluster is a computing node or a network node.

17. A communication device, wherein the communication device is used in a cloud management
platform, the cloud management platform is configured to manage an infrastructure that provides a cloud service, the infrastructure comprises at least one virtual private cloud VPC, each private cloud VPC comprises a plurality of elastic cloud servers ECSs, and the communication device comprises a transceiver module and a processing module, wherein
the transceiver module is configured to receive third configuration information from a tenant, wherein the third configuration information indicates to create a dynamic host configuration protocol internet protocol DHCP IP address pool for a second virtual private cloud VPC in the at least one virtual private cloud VPC;
the processing module is configured to configure the dynamic host configuration protocol internet protocol DHCP IP address pool based on the third configuration information;
the transceiver module is configured to receive fourth configuration information from the tenant, wherein the fourth configuration information indicates to configure a plurality of internet protocol IP addresses for an elastic network interface of a second elastic cloud server ECS in the at least one elastic cloud server ECS, and the second elastic cloud server ECS is one of elastic cloud servers ECSs comprised in the second virtual private cloud VPC;
the processing module is configured to configure a second dynamic host configuration protocol DHCP server for the dynamic host configuration protocol internet protocol DHCP IP address pool based on the fourth configuration information, wherein the second dynamic host configuration protocol DHCP server is configured to manage addresses in the dynamic host configuration protocol internet protocol DHCP IP address pool;
the transceiver module is configured to receive fifth configuration information from the tenant, wherein the fifth configuration information indicates that the plurality of elastic cloud servers ECSs comprised in the second virtual private cloud VPC are associated with the dynamic host configuration protocol internet protocol DHCP IP address pool; and
the processing module is configured to configure, based on the fifth configuration information, the second dynamic host configuration protocol DHCP server to configure the plurality of IP addresses for an elastic network interface of each elastic cloud server ECS in the plurality of elastic cloud servers ECSs comprised in the second virtual private cloud VPC.

18. The communication device according to claim 17, wherein
the transceiver module is configured to receive sixth configuration information from the tenant, wherein the sixth configuration information is used to configure information about the IP addresses for the dynamic host configuration protocol internet protocol DHCP IP address pool, and the sixth configuration information comprises: a range of the plurality of IP addresses entered by the tenant, and a quantity of the plurality of IP addresses entered by the tenant and/or the plurality of IP addresses entered by the tenant; and
the processing module is configured to configure the sixth configuration information for the second dynamic host configuration protocol DHCP server.

19. The communication device according to claim 17 or 18, wherein
the transceiver module is configured to obtain a second mapping relationship, wherein the second mapping relationship comprises a mapping relationship between the plurality of IP addresses and the plurality of client hardware addresses, and the plurality of IP addresses are in one-to-one correspondence with the plurality of client hardware addresses; and
the processing module is configured to display the second mapping relationship to the tenant.

20. The communication device according to any one of claims 17 to 19, wherein
the second dynamic host configuration protocol DHCP server is deployed in a second computing node, and the second computing node comprises the second elastic cloud server ECS; or
the second DHCP server is deployed in a DHCP server cluster, and the DHCP server cluster is a computing node or a network node.

21. A computing device, comprising a processor and a memory, wherein the processor runs instructions in the memory, so that the processor performs the method according to any one of claims 1 to 6 or the method according to any one of claims 7 to 12.

22. A computing device cluster, comprising at least one computing device, wherein each computing
device comprises a processor and a memory; and
the processor of the at least one computing device is configured to execute instructions stored in the memory of the at least one computing device, to enable the computing device cluster to perform the method according to any one of claims 1 to 6 or the method according to any one of claims 7 to 12.

23. A computer program product comprising instructions, wherein when the instructions are run by a computing device cluster, the computing device cluster is enabled to perform the method according to any one of claims 1 to 6 or the method according to any one of claims 7 to 12.

24. A computer-readable storage medium, comprising computer program instructions, wherein when the computer program instructions are executed by a computing device cluster, the computing device cluster is enabled to perform the method according to any one of claims 1 to 6 or the method according to any one of claims 7 to 12.
